(19) Europäisches Patentamt
European Patent Office
Office européen des brevets

(11) Publication number: 0 002 791 A1

(12) **EUROPEAN PATENT APPLICATION**

(21) Application number: 78101774.4

(22) Date of filing: 20.12.78

(51) Int. Cl.²: F 01 N 3/15, C 01 B 2/10, C 01 B 2/16, B 01 J 29/06

(30) Priority: 28.12.77 US 865125

(43) Date of publication of application: 11.07.79 Bulletin 79/14

(84) Designated Contracting States: BE DE FR GB IT NL SE

(71) Applicant: UNION CARBIDE CORPORATION, 270, Park Avenue, New York,N.Y. 10017 (US)

(72) Inventor: Rabo, Jule Anthony, 19 Windmill Road, Armonk (US)
Inventor: Bezman, Richard David, 383 S. Lexington Avenue, White Plains (US)
Inventor: Wolynic, Edward Thomas, 235 Garth Road, Scarsdale New York (US)

(74) Representative: Eggert, Hans-Gunther, Dr., Oberländer Ufer 90, D-5000 Köln 51 (DE)

(54) **Conversion of hydrocarbons and carbon monoxide in exhaust gas streams.**

(57) The conversion of hydrocarbons and carbon monoxide in water-containing gas streams such as exhaust gases from internal combustion engines to form environmentally innocuous products such as carbon dioxide and water is accomplished by contacting such gas streams at elevated temperatures with zeolite-based catalyst compositions which not only catalyse the oxidative combustion of the aforesaid substrates that also catalyse their reaction with water. The catalyst also promotes conversion of nitride oxide to nitrogen.

EP 0 002 791 A1

The present invention relates in general to the reaction of oxygen and water with carbon monoxide and hydrocarbon substrates to produce carbon dioxide and hydrogen. More particularly it relates to the treatment of exhaust gases from internal combustion engines to convert the carbon monoxide and hydrocarbon constituents thereof to carbon dioxide and water by contact with a catalyst composition comprising a highly siliceous zeolitic-aluminosilicate having at least one Group VIII metal deposited in the pores thereof.

In the treatment of exhaust gases from internal combustion engines, the emphasis has heretofore been almost totally on discovering and developing catalyst compositions which promote the oxidative combustion of carbon monoxide and hydrocarbons under the very difficult conditions of temperature and space velocity which are the inherent result of the normal functioning of the gasoline or diesel engine. Also the exhaust gas streams necessarily contain high concentrations of water vapor which tend to poison or otherwise inhibit the oxidation activity of the vast majority of heretofore proposed catalysts. A number of zeolite-based catalysts have been extensively studied for use in auto emission control, but have attained no commercial significance due to their strong adsorptive affinity for water vapor even when the water vapor pressure is quite low and the temperature quite high.

The water vapor in exhaust gases would not be a disadvantage, however, if it did not poison the catalyst composition. In fact, water could be quite beneficial as a reagent in the conversion of carbon monoxide to carbon dioxide by the well known water gas shift reaction, i.e.

$$CO + H_2O \longrightarrow CO_2 + H_2$$

and in the conversion of hydrocarbons to $CO_2$ and hydrogen by the equally well known steam reforming reaction, e.g.

$$C_n H_{2n+2} + 2n\ H_2O \longrightarrow nCO_2 + (3n+1)H_2$$

We have now discovered a class of zeolite based catalysts for auto emission control which are not poisoned by water vapor adsorption and which exhibit, in addition, to a remarkable activity for the oxidative combustion of paraffins, significant activity as a water gas shift catalyst and as a steam reforming catalyst. All of these activities are exhibited by our catalysts when employed to treat gas streams containing water vapor, carbon monoxide, olefins and paraffins, e.g. internal combustion exhaust gases.

These catalyst compositions comprise crystalline zeolitic aluminosilicates which have framework $SiO_2/Al_2O_3$ molar ratios of at least 25, preferably at least 40, pores sufficiently large to adsorb benzene and contain deposited on the surfaces of their internal pore cavities at least 0.002 weight-% of a Group VIII metal, preferably a Group VIII noble metal, and a surface area (B-E-T) of at least 250 $m^2/g$. These catalysts exhibit an adsorptive affinity for water at 4.6 mm Hg and 25°C of less than 0.035 gram/100 square meters. The surface area is based on the anhydrous weight of the zeolite.

The so-called large pore zeolites suitably employed in the present process include the synthetic or acid-washed natural mordenite zeolite capable of adsorbing benzene such as are described in U.S. Patent 3,436,174, issued April 1, 1969; Type-L zeolites as disclosed in U.S. Patent 3,216,789, issued November 9. 1965; Type-Y zeolites as disclosed in U.S. Patent 3,130,006, issued April 24, 1964; Type Omega zeolites as disclosed in British Patent No. 1,178,186, published January 21, 1970 and the various members of the ZSM-5 family of zeolites disclosed variously in U.S. Patent 3,702,886, U.S. Patent 3,709,979 and collectively in U.S. Patent 3,756,942. In general the ZSM-5 type zeolites can be directly synthesized to have framework $SiO_2/Al_2O_3$ molar ratios of greater than 25 and even greater than 40. The other large pore zeolites which cannot be synthesized in a sufficiently highly siliceous form can be modified by the removal of framework aluminum to appropriate degrees by well-known procedures such as steaming, acid extraction and chelation with EDTA or acetylacetone. Steam calcination at elevated temperature above about 700°C is recommended following any chemical removal of framework alumina.

As used herein in this specification and in the appended claims the following terms are intended to have the meanings as set forth immediately below;

The anhydrous state of any zeolite composition for purposes of determining constituent proportions in terms of weight per cent is the condition of the zeolite after being fired in air at 1000°C for one hour.

Surface area of all zeolitic compositions are determined by the well known Brunauer-Emmett-Teller method (B-E-T) (S. Brunauer, P. Emmett and É. Teller, J. Am. Chem. Soc. 60, 309 (1938)) using nitrogen as the adsorbate.

For the determination of the sorptive capacity of the UHP-Y compositions for any particular adsorbate, e.g. water vapor for example water or benzene, the test zeolite sample is activated by preheating at a temperature in the range of 350°C to 425°C for 16 hours at a pressure of 5 micrometers of mercury or less in a conventional McBain apparatus. Thereafter the temperature of the sample is adjusted to the desired value and contacted with the vapor of the desired adsorbate at the desired pressure.

The framework $SiO_2/Al_2O_3$ molar ratio is not necessarily the same as the apparent $SiO_2/Al_2O_3$ molar ratio as determined by conventional chemical analyses. Framework $Al_2O_3$ refers to the 4-coordinated aluminum content of the aluminosilicate structure.

The Group VIII metals dispersed within the pores of the zeolite based can be any one or a mixture of two or more of those metals of the group preferably those having an atomic number of greater than 26.

Preferably the noble metals are employed, especially those such as platinum, palladium and rhodium which do not form volatile oxides, but ruthenium is also suitable. Even though $RuO_4$ is more volatile than desirable when merely impregnated on support materials such as alumina, the pore system of the zeolite support of the present invention tends to curtail the loss of $RuO_4$ from the catalyst composition. Of the non-noble metals, cobalt and nickel are well-known steam reforming catalysts and are preferred.

Group VIII metal in the amount of at least 0.02 weight per cent based on the anhydrous weight of the zeolite is desirable for service in auto emission control, but the precise minimum is not critical and will depend in large measure upon the carbon monoxide and/or hydrocarbon content of the gas stream being treated, the process conditions such as temperature and space veolcity, and the degree of conversion desired. Amounts of Group VIII metals as high as 3.0 weight per cent can be used but in general more than 2.0 weight per cent does not add appreciably to the effectiveness of the catalyst. Preferably noble metal loadings of from 0.1 to 1.6 weight per cent are employed.

It is a critical feature of the present catalyst compositions that at least a part, preferably all of the noble metal or other Group VIII metal be deposited in the pores of the zeolite rather than on the exterior surface of the zeolite crystals or on the binder or diluent material if such is present. Above loadings of 0.05 weight per cent on typical prior known non-zeolite monolith catalysts the dispersed noble metal phase appears as small crystallites

which have properties similar to those of the bulk metal. These crystallities sinter severely at temperatures of about 1700°F with the consequent loss of activity. Such sintering is retarded in the zeolite catalysts of this invention with respect to the noble metal deposited in the pores. To accomplish this type of metal loading, at least two different procedures are known in the art, namely (1) adsorption of a fluid decomposable compound of the desired Group VIII metal by the zeolite, followed by thermal or chemical decomposition of the metal compound, and (2) cation exchange using a solution of a suitable Group VIII metal compound in which the metal is in the cationic state with coordination complexing agents, followed by thermal or chemical decomposition of the cationic complex. In method (1) the zeolite is contacted with a fluid decomposable compound of the metal thereby adsorbing the compound into the sieve. Typical of such compounds are the metal carbonyls, metal alkyls, volatile metal halides and the like. The internally adsorbed compound is then reduced thermally or chemically to its elemental metal thus leaving an active metal uniformly dispersed throughout the internal adsorption region of the molecular sieve. The ion exchange procedure of method (2) is readily accomplished in the well-known manner. Specific procedures are set forth in detail in U.S. patent 3,236,903, issued February 22, 1966.

The gas streams treated in the process of this invention contain at least 0.5% volume per cent of each of water vapor and oxygen and at least 0.01 volume per cent of

at least one molecular species selected from the group consisting of carbon monoxide, olefin and paraffin. In internal combustion engine exhausts all of these species are ordinarily present. Pressure is not a critical factor, but the temperature of contact of the gas stream and the catalyst is at least 200°C, and preferably at least 400°C, up to the crystalline destruction temperature of the zeolite-usually in the range of 800°C to 1300°C.

A principal disadvantage of alumina and other presently used refractory based catalysts for auto emission control is the fact that they have essentially no oxidative activity below about 250°C. Thus, since the catalysts have very little or no adsorptive capacity for hydrocarbon during the first 2 minutes or so after engine start-up, substantially all of the organic and carbon monoxide pollutants in the exhaust stream are vented into the atmosphere. These emissions constitute a large proportion of the total permitted under the present Federal standards. (See Federal Register, 36 (128) Part II (1971).

The present zeolite catalysts, however, exhibit a substantial adsorptive capacity for hydrocarbons during the initial phase of cold start-up, and thus store the bulk of the uncoverted hydrocarbons on the catalyst bed until the exhaust gases heat the bed sufficiently hot to initiate the conversion reactions described above.

The process of the present invention is illustrated in the following examples.

Example 1

A sample of platinum/ZSM-5 type zeolite having a framework $SiO_2/Al_2O_3$ molar ratio of 40 and a sorptive capacity for water at 4.6 Torr and 25°C of less than 0.02 g/100 $m^2$ nitrogen surface area and a pore large enough to adsorb benzene was compared with a standard alumina-based platinum-palladium auto emission control catalyst for the conversion of carbon monoxide both in the presence and absence of water vapor. A test gas containing 0.054 vol. % propylene, 2.600 vol. % oxygen and 95.926 vol.% nitrogen in addition to 1.420 vol.% carbon monoxide was passed over a bed of each catalyst at a rate such that the GHSV per unit weight of noble metal was approximately the same in each test. The temperatures of the beds were varied so as to determine the temperatures at which one-half of the carbon monoxide was converted to carbon dioxide. The tests were then repeated using an identical procedure, but with the test gas mixed with water vapor in the ratio of 90 moles of test gas to 10 moles of water vapor. The measurements using both the dry and wet test gases were again repeated, and the half conversion temperatures for the olefin component determined. The results of all of the measurements are set forth in Table I.

Table I

| Catalyst | $T_{½}$, CO; $^{o}F$ | | $T_{½}$, $C_3H_6$; $^{o}F$ | |
|---|---|---|---|---|
| | Dry | Wet | Dry | Wet |
| Pt, Pd/$\gamma$-$Al_2O_3$ | 500 | 480 | 515 | 510 |
| Pt/ZSM-5 | 547 | 470 | 565 | 503 |

It is readily apparent that in each case, the presence of water resulted in some of the carbon monoxide being converted to carbon dioxide by the water gas shift reaction, but that the improvement in conversion in the case of the catalyst of the present invention is significantly greater. Similar improvement is evident in the case of conversion of the olefin by the steam reforming reaction in the case of the catalyst of the present invention.

Example 2

The ZSM-5 type catalyst of Example 1, and a similar platinum ZSM-5 type catalyst having a framework $SiO_2/Al_2O_3$ molar ratio of 80 were compared with the same commercial platinum-palladium alumina catalyst of Example 1 for paraffin oxidation conversion in the presence of water vapor. It was found that in a test gas stream containing 0.05 volume-% propane, 2.6 volume-% oxygen and 10 volume % water vapor, the ZSM-5 catalyst of Example 1 converted one half of the propane of the test gas at a temperature 180$^{o}$F lower than did the commercial alumina-based catalyst under identical conditions. The ZSM-5 type catalyst having the $SiO_2/Al_2O_3$ ratio of 80 converted one half of the propane

at temperature 228°F lower than the commercial catalyst, thus, establishing a remarkable paraffin conversion activity.

The catalyst of this invention especially those wherein the Group VIII metal thereof includes at least one of the metals from the group consisting of cobalt, nickel, rhodium and ruthenium promote the conversion of nitric oxide of exhaust gas streams to nitrogen when the gas stream is sufficiently low in oxygen to be essentially neutral or is reducing in the redox sense.

WHAT IS CLAIMED IS:

1. Process for producing; carbon dioxide by the conversion of hydrocarbons and carbon monoxide in a gas stream containing same in admixture with oxygen and water vapor which comprises contacting said gas stream at a temperature of at least 300°C with a catalyst composition comprising a crystalline zeolitic aluminosilicate having a framework $SiO_2/Al_2O_3$ molar ratio of at least 25 a pore size large enough to adsorb benzene, said aluminosilicate having deposited in its internal cavities at least 0.002 weight per cent of a Group VIII metal.

2. Process according to claim 1 wherein the Group VIII metal is a noble metal.

3. Process for converting nitric oxide to nitrogen by contacting same at an elevated temperature with a catalyst composition comprising a crystalline zeolitic aluminosilicate having a framework $SiO_2/Al_2O_3$ molar ratio of at least 25 a pore size large enough to adsorb benzene, said aluminosilicate having deposited in its internal cavities at least 0.002 weight per cent of a Group VIII metal.

European Patent Office

# EUROPEAN SEARCH REPORT

0002791

Application number

EP 78 10 1774

## DOCUMENTS CONSIDERED TO BE RELEVANT

| Category | Citation of document with indication, where appropriate, of relevant passages | Relevant to claim |
|---|---|---|
| | US - A - 3 276 993 (L.J. REID Jr.)<br>* Column 2, line 19 to column 3, line 64 *<br>-- | 1,2 |
| | US - A - 3 346 328 (F.J. SERGEYS)<br>* Column 1, line 44 to column 2, line 35 *<br>-- | 1,2 |
| | FR - A - 2 150 110 (W.R. GRACE & CO.)<br>* Page 10, lines 1-9 *<br>-- | 3 |
| A | FR - A - 1 403 228 (W.R. GRACE & CO.) | |
| A | US - A - 3 645 914 (E.J. ROSINSKI)<br>---- | |

CLASSIFICATION OF THE APPLICATION (Int. Cl.²)

F 01 N 3/15
C 01 B 2/10
2/16
B 01 J 29/06

TECHNICAL FIELDS SEARCHED (Int.Cl.²)

F 01 N 3/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-04-1979 | BOGAERTS |